# EUROPEAN PATENT SPECIFICATION

(11) **EP 2 991 156 B1**
(45) Date of publication and mention of the grant of the patent: **21.11.2018**
(21) Application number: 13883017.9
(22) Date of filing: 16.08.2013
(51) Int. Cl.: H01M 10/44, H02J 7/00

(54) **METHOD AND DEVICE FOR PERFORMING LARGE-CURRENT CHARGING ON INTELLIGENT TERMINAL**
VERFAHREN UND VORRICHTUNG ZUR DURCHFÜHRUNG VON LADUNG MIT GROSSEN STRÖMEN AUF EINEM INTELLIGENTEN ENDGERÄT
PROCÉDÉ ET DISPOSITIF POUR EFFECTUER UNE CHARGE EN COURANT DE HAUTE INTENSITÉ SUR UN TERMINAL INTELLIGENT

(30) Priority: 24.04.2013 CN 201310144183
(43) Date of publication of application: 02.03.2016
(73) Proprietor: Huizhou TCL Mobile Communication Co., Ltd., Huizhou, Guangdong 516006 (CN)
(72) Inventor: ZHAO, Shiqing, HuiZhou Guangdong 516006 (CN)
(74) Representative: Brachmann, Roland W.
(86) International application number: PCT/CN2013/081610
(87) International publication number: WO 2014/173045

(56) References cited:
- CN-A- 101 340 011
- CN-A- 101 986 504
- CN-A- 103 000 965
- CN-A- 103 208 661
- CN-Y- 201 282 176
- US-A1- 2008 258 688
- US-A1- 2009 102 429
- US-A1- 2012 217 935
- US-A1- 2012 249 084
- US-A1- 2012 326 656

## Description

The present invention relates to the field of smart terminals and in particular to a method and apparatus for high current charging of a smart terminal.

According to the current development trend of intelligent terminals, such as intelligent mobile phones and tablet computers, display screens of smart terminals are having increasingly big sizes, increasingly strong functions and increasingly fast processing speed. All of these changes will result in increasingly high power consumption by intelligent terminals. At the same time, batteries used by smart terminals will correspondingly have increasingly high capacities. Due to the increased battery capacity, the charging current needs to be increased provided that the charging time remains unchanged. As a result, increasingly high requirements are imposed on charging systems. Charging of intelligent mobile phones or tablet computers with low power consumption according to the prior art is mostly performed through USB (Universal Serial Bus) interfaces. As the current carried by the physical link of V_{BUS} (power supply terminal) and GND (ground terminal) of a conventional USB interface is designed according to the industrial standards for USB interfaces, the nominal current carried thereby is 500 mA. However, the link current on V_{BUS} and GND of a conventional USB interface is far from meeting the requirements by ever developing intelligent terminals. More and more smart terminals require a charging current far exceeding the current provided by a conventional USB. Some solutions are needed to address the problem of high current charging of intelligent terminals. The solution for high current charging according to the prior art is to add a DC charging seat. It increases the cost, and moreover, the DC charging seat is non-standard, which requires a dedicated DC interface charger, leading to additional special accessories for products, increased product cost and relatively poor user experience.

Therefore, the prior art is in need of improvement and development.

In light of the above drawbacks of the prior art, the present invention provides a method and apparatus for high current charging of a smart terminal, which can control the charging of smart terminals at a high current, and reduce the charging current in case of overcurrent charging such that the charging voltage is maintained within a reasonable range, thereby overcoming the drawbacks and insufficiencies of the prior art.

This problem is solved according to the features of the independent claims. Further embodiments result from the depending claims.

The preambles of the independent claims are based on document US2008/258688 A1.

To solve the technical problem, the present invention employs the following technical solution:
A method for high current charging of a smart terminal, comprising: when the signal wire at the positive data cable terminal and the signal wire at the negative data cable terminal are in the short circuit status, switching the power supply to a high-current power supply, wherein both the signal wire at the positive data cable terminal and the signal wire at the negative data cable terminal are signal wires for the USB interface of the smart terminal; gradually increasing the charging current, and synchronously detecting the charging voltage corresponding to the charging current; determining if the charging current is over-current according to the charging voltage; and decreasing the charging current when the charging current is over-current, such that the charging voltage is within a predetermined upper limit range; the step of said gradually increasing the charging current and synchronously detecting the charging voltage corresponding to the charging current comprises: setting the charging current to a preset initial value, detecting the charging voltage when the charging current is at the preset initial value, and recording it as the standard charging voltage; and increasing the charging current according to an increase pattern of increasing by a preset increase value each time, and detecting the charging voltage corresponding to the increased charging current; the step of said determining if the charging current is over-current according to the charging voltage comprises: determining if the difference between the charging voltage corresponding to the increased charging current and the standard charging voltage is smaller than a preset voltage threshold value, wherein the charging current being over-current is corresponding to that the difference is greater than the preset voltage threshold value; when the difference is smaller than the preset voltage threshold value, keeping on increasing the charging current according to the increase pattern, otherwise charging with the increased charging current as the maximum charging current; and when the difference is greater than the preset voltage threshold value, decreasing the charging current according to a decrease sequence of decreasing by a preset decrease value each time until the difference is smaller than the preset voltage threshold value; said short circuit status is obtained by detecting the current, or obtained by detecting the resistance, or obtained by detecting transmitted and received data; the preset increase value is 500 mA, the preset decrease value is 100 mA, and the preset voltage threshold value is 0.3 V.

According to the above method for high current charging of a smart terminal, the power supply terminal and the ground terminal of the USB interface of the smart terminal, as well as the connection cable thereof, correspond to the maximum charging current standard; the USB connector, the power supply terminal of the USB seat, the ground terminal and the corresponding connection cable of the smart terminal have a cross-sectional area greater than the standard cross-sectional area.

Also, a method is provided for high current charging of a smart terminal, comprising: when the signal wire at the positive data cable terminal and the signal wire at the negative data cable terminal are in the short circuit status, switching the power supply to a high-current power supply, wherein both the signal wire at the positive data cable terminal and the signal wire at the negative data cable terminal are signal wires for the USB interface of the smart terminal; gradually increasing the charging current, and synchronously detecting the charging voltage corresponding to the charging current; determining if the charging current is over-current according to the charging voltage; and decreasing the charging current when the charging current is over-current, such that the charging voltage is within a predetermined upper limit range.

According to the above method for high current charging of a smart terminal, the power supply terminal and the ground terminal of the USB interface of the smart terminal, as well as the connection cable thereof, correspond to the maximum charging current standard.

According to the above method for high current charging of a smart terminal, the USB connector, the power supply terminal of the USB seat, the ground terminal and the corresponding connection cable of the smart terminal have a cross-sectional area greater than the standard cross-sectional area.

According to the above method for high current charging of a smart terminal, said short circuit status is obtained by detecting the current, or obtained by detecting the resistance, or obtained by detecting transmitted and received data.

According to the above method for high current charging of a smart terminal, the step of said gradually increasing the charging current and synchronously detecting the charging voltage corresponding to the charging current comprises: setting the charging current to a preset initial value, detecting the charging voltage when the charging current is at the preset initial value, and recording it as the standard charging voltage; and increasing the charging current according to an increase pattern of increasing by a preset increase value each time, and detecting the charging voltage corresponding to the increased charging current.

According to the above method for high current charging of a smart terminal, the step of said determining if the charging current is over-current according to the charging voltage comprises: determining if the difference between the charging voltage corresponding to the increased charging current and the standard charging voltage is smaller than a preset voltage threshold value, wherein the charging current being over-current is corresponding to that the difference is greater than the preset voltage threshold value.

According to the above method for high current charging of a smart terminal, the method further comprises: when the difference is smaller than the preset voltage threshold value, keeping on increasing the charging current according to the increase pattern, otherwise charging with the increased charging current as the maximum charging current.

According to the above method for high current charging of a smart terminal, the method further comprises: when the difference is greater than the preset voltage threshold value, decreasing the charging current according to a decrease sequence of decreasing by a preset decrease value each time until the difference is smaller than the preset voltage threshold value.

According to the above method for high current charging of a smart terminal, the preset increase value is 500 mA, the preset decrease value is 100 mA, and the preset voltage threshold value is 0.3 V.

An apparatus is provided for high current charging of a smart terminal, comprising: a power supply switching module for switching the power supply to a high-current power supply when the signal wire at the positive data cable terminal and the signal wire at the negative data cable terminal are in the short circuit status, wherein both the signal wire at the positive data cable terminal and the signal wire at the negative data cable terminal are signal wires for the USB interface of the smart terminal; a control module for gradually increasing the charging current, and for synchronously detecting the charging voltage corresponding to the charging current; and a determination module for determining if the charging current is over-current according to the charging voltage; the control module is further for decreasing the charging current when the charging current is over-current, such that the charging voltage is within a predetermined upper limit range.

According to the above apparatus for high current charging of a smart terminal, the power supply terminal and the ground terminal of the USB interface of the smart terminal, as well as the connection cable thereof, correspond to the maximum charging current standard.

According to the above apparatus for high current charging of a smart terminal, the USB connector, the power supply terminal of the USB seat, the ground terminal and the corresponding connection cable of the smart terminal have a cross-sectional area greater than the standard cross-sectional area.

According to the above apparatus for high current charging of a smart terminal, said short circuit status is obtained by detecting the current, or obtained by detecting the resistance, or obtained by detecting transmitted and received data by the control module.

According to the above apparatus for high current charging of a smart terminal, the control module is further for setting the charging current to a preset initial value, detecting the charging voltage when the charging current is at the preset initial value, and recording it as the standard charging voltage, and increasing the charging current according to an increase pattern of increasing by a preset increase value each time, and detecting the charging voltage corresponding to the increased charging current.

According to the above apparatus for high current charging of a smart terminal, the determination module is further for determining if the difference between the charging voltage corresponding to the increased charging current and the standard charging voltage is smaller than a preset voltage threshold value, wherein the charging current being over-current is corresponding to that the difference is greater than the preset voltage threshold value.

According to the above apparatus for high current charging of a smart terminal, the control module is further for keeping on increasing the charging current according to the increase pattern when the difference is smaller than the preset voltage threshold value, otherwise charging with the increased charging current as the maximum charging current.

According to the above apparatus for high current charging of a smart terminal, the control module is further for, when the difference is greater than the preset voltage threshold value, decreasing the charging current according to a decrease sequence of decreasing by a preset decrease value each time until the difference is smaller than the preset voltage threshold value.

According to the above apparatus for high current charging of a smart terminal, the preset increase value is 500 mA, the preset decrease value is 100 mA, and the preset voltage threshold value is 0.3 V.

Compared with the prior art, the present invention enables USB interfaces and corresponding connection cables thereof to meet the demand of smart terminals for high current charging through USB interfaces in terms of physical characteristics thereof according to the maximum charging current value that can satisfy the smart terminals; identifies if the power supply is a high-current power supply according to if the two signal wires, the D+ (the positive data cable terminal) signal wire and the D- (the negative data cable terminal) signal wire of a USB interface are in the short circuit status, determines if the charging current is the maximum charging current according to the corresponding charging voltage when increasing the charging current for high current charging, can appropriately reduce the charging current during over-current charging, such that the charging voltage works in a reasonable range, thereby protecting the charger that works under normal charging current. The method and apparatus for high current charging of a smart terminal according to the present invention can realize intelligent charging such that the smart terminal can be charged at high current, which shortens the charging time and further improves the user experience. At the same time, it controls over-current charging and protects the charging safety.

The aforementioned characteristics, features and advantages of the invention as well as the way they are achieved will be further illustrated in connection with the following examples and considerations as discussed in view of the figures.
- Fig.1: is a flow chart of the method for high current charging of a smart terminal according to the present invention.
- Fig.2: illustrates the structure of the USB interface for charging a smart terminal in the method for high current charging of the smart terminal according to the present invention.

To make the object, technical solution and advantages of the present invention clearer and more specific, the present invention will be further described in detail below with reference to the accompanying drawings and embodiments. It should be understood that the specific embodiments herein are only used to explain the present invention and are not used to limit the present invention.

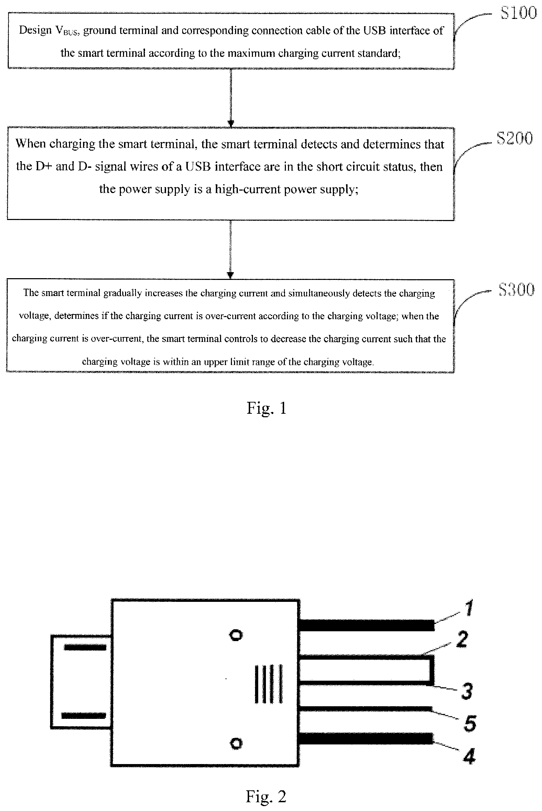

As shown in Fig.1, the method for high current charging of a smart terminal according to the present invention comprises the following implementation steps:
S100, designing V_{BUS}, ground terminal and corresponding connection cable of the USB interface of the smart terminal according to the maximum charging current standard, namely, the power supply terminal and the ground terminal of the USB interface of the smart terminal, as well as the connection cable thereof, correspond to the maximum charging current standard. Specifically, to realize high current charging of the smart terminal, first, physical characteristics must meet the requirements of high current charging. Therefore, it is necessary to design V_{BUS}, ground terminal and corresponding connection cable of the USB interface of the smart terminal according to the maximum charging current standard, namely, the USB connector, the power supply terminal of the USB seat, the ground terminal and the corresponding connection cable of the smart terminal have a cross-sectional area greater than the standard cross-sectional area. Specifically, the cross-sectional areas of the USB connector, V_{BUS} of the USB seat, the ground terminal and the corresponding connection cable are designed to be 2 times, 3 times or 4 times of the standard cross-sectional area, the USB connector and the USB seat herein comprise various USB charge cable connectors and USB charging seats for charging intelligent terminals, the corresponding connection cable comprises relevant connection cables and PCB wiring that are connected with the USB interface on the smart terminal, these USB terminals and corresponding connection cables thereof are widened or thickened such that their cross-sectional areas are 2 times, 3 times, 4 times or the like of the standard cross-sectional area so as to meet the maximum charging current. The standard cross-sectional area herein refers to cross-sectional areas of all USB interfaces and relevant connection cables thereof under a standard charging current of 500 mA, 2 times means 1000 mA, 3 times means 1500 mA, 4 times means 2000 mA, so on and so forth. It should be noted that the design of 2 times, 3 times or 4 times herein is for the design implementation of the maximum charging current of the smart terminal.
S200, when the signal wire at the positive data cable terminal and the signal wire at the negative data cable terminal are in the short circuit status, switching the power supply to a high-current power supply, wherein both the signal wire at the positive data cable terminal and the signal wire at the negative data cable terminal are signal wires for the USB interface of the smart terminal, wherein said short circuit status is obtained by detecting the current, or obtained by detecting the resistance, or obtained by detecting transmitted and received data. Specifically, when charging the smart terminal, the smart terminal detects and determines that the D+ (the positive data cable terminal) signal wire and the D- (the negative data cable terminal) signal wire of a USB interface are in the short circuit status, then the power supply is a high-current power supply; when the power supply for charging the smart terminal is a dedicated high-current charger, the two signal wires, D+ and D-, of the USB interface are connected in short circuit, as shown in Fig.2, the USB interface shown in Fig.2 that is capable of high-current charging comprises a power supply terminal 1 (V_{BUS}), a data terminal 2 (D-), a data terminal 3 (D+), a ground terminal 4 (GND) and an ID (identity) terminal 5 (ID). The smart terminal determines if the charging power supply is a high-current power supply by detecting and determining if the D+ and D- signal wires of the USB interface are connected in short circuit. Specifically, if the D+ and D- signal wires are connected in short circuit is determined using a current detection method, a resistance detection method, or a detection method of transmitted and received data. The detection method belongs to the prior art, which will not be described herein. When the D+ and D- signal wires of the USB interface are not in the short circuit status, it can be determined that the charging power supply is a standard 500 mA charging power supply. This step can achieve the intelligent identification of the charging power supply by the smart terminal, thereby performing charging control and realizing intelligent charging according to the identification results.
S300, gradually increasing the charging current, and synchronously detecting the charging voltage corresponding to the charging current. Specifically, the smart terminal gradually increases the charging current and simultaneously detects the charging voltage, determines if the charging current is over-current according to the charging voltage; when the charging current is over-current, the smart terminal controls to decrease the charging current such that the charging voltage is within an upper limit range of the charging voltage. According to the identification results from Step S200, the smart terminal performs charging control through gradually increasing the charging current, and simultaneously detects if the charging voltage is within a safe and reasonable range. When it exceeds the safe and reasonable range, i.e. in the case where the charging current is over-current, it further controls to decrease the charging current, thereby realizing intelligent charging by the smart terminal.

Determining if the charging current is over-current according to the charging voltage.

Decreasing the charging current when the charging current is over-current, such that the charging voltage is within a predetermined upper limit range.

The step of said gradually increasing the charging current and synchronously detecting the charging voltage corresponding to the charging current comprises: setting the charging current to a preset initial value, detecting the charging voltage when the charging current is at the preset initial value, and recording it as the standard charging voltage; and increasing the charging current according to an increase pattern of increasing by a preset increase value each time, and detecting the charging voltage corresponding to the increased charging current.

The step of said determining if the charging current is over-current according to the charging voltage comprises: determining if the difference between the charging voltage corresponding to the increased charging current and the standard charging voltage is smaller than a preset voltage threshold value, wherein the charging current being over-current is corresponding to that the difference is greater than the preset voltage threshold value.

The method further comprises: when the difference is smaller than the preset voltage threshold value, keeping on increasing the charging current according to the increase pattern, otherwise charging with the increased charging current as the maximum charging current.

The method further comprises: when the difference is greater than the preset voltage threshold value, decreasing the charging current according to a decrease sequence of decreasing by a preset decrease value each time until the difference is smaller than the preset voltage threshold value.

Wherein the preset increase value is 500 mA, the preset decrease value is 100 mA, and the preset voltage threshold value is 0.3 V.

Specifically, the smart terminal first sets the charging current at 500 mA, detects the charging voltage when the charging current is 500 mA and sets it as the standard charging voltage, subsequently sets the charging current at an increase sequence of increasing by 100 mA each time, detects the charging voltage corresponding to the increased charging current, and determines if the difference between the charging voltage corresponding to the increased charging current and the standard charging voltage is smaller than a preset voltage threshold value, if the difference is smaller than the preset voltage threshold value, keeps on increasing the charging current, otherwise sets the increased charging current as the maximum charging current for charging; the preset voltage threshold value is preferably 0.3 V. For example, the smart terminal initializes the charging current of the charging circuit to 500 mA, detects the charging voltage when the charging current is 500 mA, and marks the charging voltage at the charging current of 500 mA as V500, subsequently increases the charging current to 600 mA, marks the charging voltage at the charging current of 600 mA as V600, if the voltage of V600 is lower than the voltage of V500 and the difference thereof is within 0.3 V, i.e. V500-V600<0.3V, then keeps on increasing the charging current to 700 mA, marks the charging voltage at the charging current of 700 mA as V700, if the voltage of V700 is lower than the voltage of V500 and the difference thereof exceeds 0.3 V, i.e. V500-V700>0.3V, the charging current of 700 mA is the maximum charging current of said charger; if the voltage of V700 is lower than the voltage of V500 and the difference thereof is within 0.3 V, i.e. V500-V700<0.3V, then keeps on increasing the charging current to 800 mA, marks the charging voltage at the charging current of 800 mA as V800, compares and determines if the value by which V800 is lower than V500 is within or exceeding the range of 0.3 V, if within 0.3 V, i.e. V500-V800<0.3V, keeps on increasing the charging current until reaching a charging current where the voltage is lower than the voltage at the charging current of 500 mA by a value exceeding 0.3 V, and the charging current at this point is the maximum charging current of said charger.

When the smart terminal detects that the difference between the charging voltage at a charging current and the standard charging voltage is greater than the preset voltage threshold value, it sets the charging current according to a decrease sequence of decreasing by 100 mA each time until the difference between the charging voltage at the decreased charging current and the standard charging voltage is smaller than the preset voltage threshold value, such that the charging voltage of the smart terminal is controlled within an upper limit range of the charging voltage. For example, if the charging voltage at a charging current is Vx, marks the charging voltage at the charging current of 500 mA as V500, if V500-Vx>0.3V, then the charging current at this point is over-current charging and the charging current should be decreased such thatV500-Vx<0.3V, consequently the charging current and the charging voltage will be in a reasonable range, and the charging current is decreased by 100 mA each time.

The present invention further provides an apparatus for high current charging of a smart terminal, which is implemented using the above method for high current charging of a smart terminal. Specifically, the apparatus for high current charging of a smart terminal in this embodiment comprises:
A power supply switching module for switching the power supply to a high-current power supply when the signal wire at the positive data cable terminal and the signal wire at the negative data cable terminal are in the short circuit status, wherein both the signal wire at the positive data cable terminal and the signal wire at the negative data cable terminal are signal wires for the USB interface of the smart terminal;
A control module for gradually increasing the charging current, and for synchronously detecting the charging voltage corresponding to the charging current;
A determination module for determining if the charging current is over-current according to the charging voltage;
The control module is further for decreasing the charging current when the charging current is over-current, such that the charging voltage is within a predetermined upper limit range.

According to the apparatus for high current charging of a smart terminal in this embodiment, the power supply terminal and the ground terminal of the USB interface of the smart terminal, as well as the connection cable thereof, correspond to the maximum charging current standard.

According to the apparatus for high current charging of a smart terminal in this embodiment, the USB connector, the power supply terminal of the USB seat, the ground terminal and the corresponding connection cable of the smart terminal have a cross-sectional area greater than the standard cross-sectional area.

According to the apparatus for high current charging of a smart terminal in this embodiment, said short circuit status is obtained by detecting the current, or obtained by detecting the resistance, or obtained by detecting transmitted and received data by the control module.

According to the apparatus for high current charging of a smart terminal in this embodiment, the control module is further for setting the charging current to a preset initial value, detecting the charging voltage when the charging current is at the preset initial value, and recording it as the standard charging voltage, and increasing the charging current according to an increase pattern of increasing by a preset increase value each time, and detecting the charging voltage corresponding to the increased charging current.

According to the apparatus for high current charging of a smart terminal in this embodiment, the determination module is further for determining if the difference between the charging voltage corresponding to the increased charging current and the standard charging voltage is smaller than a preset voltage threshold value;
Wherein the charging current being over-current is corresponding to that the difference is greater than the preset voltage threshold value.

According to the apparatus for high current charging of a smart terminal in this embodiment, the control module is further for keeping on increasing the charging current according to the increase pattern when the difference is smaller than the preset voltage threshold value, otherwise charging with the increased charging current as the maximum charging current.

According to the apparatus for high current charging of a smart terminal in this embodiment, the control module is further for, when the difference is greater than the preset voltage threshold value, decreasing the charging current according to a decrease sequence of decreasing by a preset decrease value each time until the difference is smaller than the preset voltage threshold value.

According to the apparatus for high current charging of a smart terminal in this embodiment, the preset increase value is 500 mA, the preset decrease value is 100 mA, and the preset voltage threshold value is 0.3 V.

## Claims

1. A method (S200-S300) for high current charging of a smart terminal, comprising:
- When the signal wire at the positive data cable terminal and the signal wire at the negative data cable terminal are in the short circuit status, switching the power supply to a high-current power supply, wherein both the signal wire at the positive data cable terminal and the signal wire at the negative data cable terminal are signal wires for the USB interface of the smart terminal (S200);
- Gradually increasing the charging current, and synchronously detecting the charging voltage corresponding to the charging current (S300);
- Determining if the charging current is over-current according to the charging voltage (S300); and
- Decreasing the charging current when the charging current is over-current, such that the charging voltage is within a predetermined upper limit range (S300),
wherein the step of said gradually increasing the charging current and synchronously detecting the charging voltage corresponding to the charging current comprises:
- Setting the charging current to a preset initial value, detecting the charging voltage when the charging current is at the preset initial value, and recording it as the standard charging voltage; and
- Increasing the charging current according to an increase pattern of increasing by a preset increase value each time, and detecting the charging voltage corresponding to the increased charging current,
wherein the step of said determining if the charging current is over-current according to the charging voltage comprises:
- Determining if the difference between the charging voltage corresponding to the increased charging current and the standard charging voltage is smaller than a preset voltage threshold value;
- Wherein the charging current being over-current is corresponding to that the difference is greater than the preset voltage threshold value,
wherein the method further comprises:
- When the difference is smaller than the preset voltage threshold value, keeping on increasing the charging current according to the increase pattern, otherwise charging with the increased charging current as the maximum charging current,
wherein the method further comprises:
- When the difference is greater than the preset voltage threshold value, decreasing the charging current according to a decrease sequence of decreasing by a preset decrease value each time until the difference is smaller than the preset voltage threshold value, and **characterized in that** the preset increase value is 500 mA, the preset decrease value is 100 mA, and the preset voltage threshold value is 0.3 V.

2. The method according to claim 1, wherein the power supply terminal (1) and the ground terminal (4) of the USB interface of the smart terminal, as well as the connection cable thereof, correspond to the maximum charging current (S100).

3. The method according to any of the preceding claims, wherein the USB connector, the power supply terminal (1) of the USB seat, the ground terminal (4) and the corresponding connection cable of the smart terminal have a cross-sectional area greater than the standard cross-sectional area for a charging current of 500mA.

4. The method according to any of the preceding claims, wherein a short circuit status is detected by detecting the current, or obtained by detecting the resistance, or obtained by detecting transmitted and received data.

5. An apparatus for high current charging of a smart terminal, comprising:
- A power supply switching module for switching the power supply to a high-current power supply when the signal wire at the positive data cable terminal (3) and the signal wire at the negative data cable terminal (2) are in the short circuit status, wherein both the signal wire at the positive data cable terminal and the signal wire at the negative data cable terminal are signal wires for a USB interface of the smart terminal;
- A control module for gradually increasing the charging current, and for synchronously detecting the charging voltage corresponding to the charging current; and
- A determination module for determining if the charging current is over-current according to the charging voltage;
wherein
- the control module is further for decreasing the charging current when the charging current is over-current, such that the charging voltage is within a predetermined upper limit range;
- the control module is further for setting the charging current to a preset initial value, detecting the charging voltage when the charging current is at the preset initial value, and recording it as the standard charging voltage, and increasing the charging current according to an increase pattern of increasing by a preset increase value each time, and detecting the charging voltage corresponding to the increased charging current.
- the determination module is further for determining if the difference between the charging voltage corresponding to the increased charging current and the standard charging voltage is smaller than a preset voltage threshold value;
- the charging current being over-current is corresponding to that the difference is greater than the preset voltage threshold value,
- wherein the control module is further for keeping on increasing the charging current according to the increase pattern when the difference is smaller than the preset voltage threshold value, otherwise charging with the increased charging current as the maximum charging current,
- the control module is further for, when the difference is greater than the preset voltage threshold value, decreasing the charging current according to a decrease sequence of decreasing by a preset decrease value each time until the difference is smaller than the preset voltage threshold value, and
- **characterized in that** the preset increase value is 500 mA, the preset decrease value is 100 mA, and the preset voltage threshold value is 0.3 V.

6. The apparatus according to claim 5, wherein the power supply terminal (1) and the ground terminal (4) of the USB interface of the smart terminal, as well as the connection cable thereof, correspond to the maximum charging current.

7. The apparatus according to any of claims 5 or 6, wherein the USB connector, the power supply terminal (1) of the USB seat, the ground terminal (4) and the corresponding connection cable of the smart terminal have a cross-sectional area greater than the standard cross-sectional area for a charging current of 500mA.

8. The apparatus according to any of claims 5 to 7, wherein a short circuit status is detected by detecting the current, or obtained by detecting the resistance, or obtained by detecting transmitted and received data by the control module.

## Patentansprüche

1. Verfahren (S200-S300) zum Aufladen eines intelligenten Endgeräts mit hohen Ladeströmen, umfassend:
- wenn sich der Signaldraht am positiven Datenkabelanschluss und der Signaldraht am negativen Datenkabelanschluss in einem Kurzschlusszustand befinden, Wechseln der Stromversorgung zu einer Versorgung mit hohem Strom, wobei sowohl der Signaldraht am positiven Datenkabelanschluss als auch der Signaldraht am negativen Datenkabelanschluss Signaldrähte für die USB-Schnittstelle des intelligenten Endgeräts sind (S200);
- allmähliches Erhöhen des Ladestroms und gleichzeitiges Erkennen der Ladespannung, die dem Ladestrom entspricht (S300);
- Ermitteln, ob der Ladestrom gemäß der Ladespannung ein Überstrom ist (S300); und
- Verringern des Ladestroms, wenn der Ladestrom ein Überstrom ist, sodass die Ladespannung innerhalb eines vorbestimmten oberen Grenzbereichs liegt (S300),
wobei der Schritt des allmählichen Erhöhens des Ladestroms und des gleichzeitigen Erkennens der Ladespannung, die dem Ladestrom entspricht, umfasst:
- Festlegen des Ladestroms auf einen voreingestellten Anfangswert, Erkennen der Ladespannung, wenn sich der Ladestrom auf dem voreingestellten Anfangswert befindet, und Aufzeichnen dieser als die Standardladespannung; und
- Erhöhen des Ladestroms gemäß einem Anstiegsmuster zum jeweiligen Erhöhen um einen voreingestellten Anstiegswert und Erkennen der Ladespannung, die dem erhöhten Ladestrom entspricht,
wobei der Schritt des Ermittelns, ob der Ladestrom gemäß der Ladespannung ein Überstrom ist, umfasst:
- Ermitteln, ob die Differenz zwischen der dem erhöhten Ladestrom entsprechenden Ladespannung und der Standardladespannung kleiner als ein voreingestellter Spannungsschwellenwert ist;
- wobei ein Überstrom des Ladestroms einer Differenz entspricht, die größer als der voreingestellte Spannungsschwellenwert ist,
wobei das Verfahren ferner umfasst:
- wenn die Differenz kleiner als der voreingestellte Spannungsschwellenwert ist, weiterführendes Erhöhen des Ladestroms gemäß dem Anstiegsmuster, andernfalls Laden mit dem erhöhten Ladestrom als dem maximalen Ladestrom,
wobei das Verfahren ferner umfasst:
- wenn die Differenz größer als der voreingestellte Spannungsschwellenwert ist, Verringern des Ladestroms gemäß einer Reduktionssequenz zum jeweiligen Reduzieren um einen voreingestellten Reduktionswert, bis die Differenz kleiner als der voreingestellte Spannungsschwellenwert ist, und
**dadurch gekennzeichnet, dass**
der voreingestellte Anstiegswert 500 mA beträgt, der voreingestellte Reduktionswert 100 mA beträgt und der voreingestellte Spannungsschwellenwert 0,3 V beträgt.

2. Verfahren nach Anspruch 1, wobei der Stromversorgungsanschluss (1) und der Erdungsanschluss (4) der USB-Schnittstelle des intelligenten Endgeräts sowie das Verbindungskabel davon dem maximalen Ladestrom entsprechen (S100).

3. Verfahren nach einem der vorangehenden Ansprüche, wobei der USB-Verbinder, der Stromversorgungsanschluss (1) der USB-Aufnahme, der Erdungsanschluss (4) und das entsprechende Verbindungskabel des intelligenten Endgeräts eine Querschnittsfläche aufweisen, die größer als die Standardquerschnittsfläche für einen Ladestrom von 500 mA ist.

4. Verfahren nach einem der vorangehenden Ansprüche, wobei ein Kurzschlusszustand durch Erkennen des Stroms erkannt wird oder durch Erkennen des Widerstands erhalten wird oder durch Erkennen von gesendeten und empfangenen Daten erhalten wird.

5. Vorrichtung zum Aufladen eines intelligenten Endgeräts mit hohen Ladeströmen, umfassend:
- ein Stromversorgungsschaltmodul zum Schalten der Stromversorgung zu einer Starkstromversorgung, wenn sich der Signaldraht am positiven Datenkabelanschluss (3) und der Signaldraht am negativen Datenkabelanschluss (2) in einem Kurzschlusszustand befinden, wobei sowohl der Signaldraht am positiven Datenkabelanschluss als auch der Signaldraht am negativen Datenkabelanschluss Signaldrähte für eine USB-Schnittstelle des intelligenten Endgeräts sind;
- ein Steuermodul zum allmählichen Erhöhen des Ladestroms und zum gleichzeitigen Erkennen der Ladespannung, die dem Ladestrom entspricht; und
- ein Ermittlungsmodul zum Ermitteln, ob der Ladestrom gemäß der Ladespannung ein Überstrom ist;
wobei
- das Steuermodul ferner zum Verringern des Ladestroms ausgelegt ist, wenn der Ladestrom ein Überstrom ist, sodass die Ladespannung innerhalb eines vorbestimmten oberen Grenzbereichs liegt;
- wobei das Steuermodul ferner zum Festlegen des Ladestroms auf einen voreingestellten Anfangswert, zum Erkennen der Ladespannung, wenn sich der Ladestrom auf dem voreingestellten Anfangswert befindet, und zum Aufzeichnen dieser als die Standardladespannung und zum jeweiligen Erhöhen um einen voreingestellten Anstiegswert und Erkennen der Ladespannung, die dem erhöhten Ladestrom entspricht, und zum Erkennen der Ladespannung, die dem erhöhten Ladestrom entspricht, ausgelegt ist,
- wobei das Ermittlungsmodul ferner zum Ermitteln ausgelegt ist, ob die Differenz zwischen der dem erhöhten Ladestrom entsprechenden Ladespannung und der Standardladespannung kleiner als ein voreingestellter Spannungsschwellenwert ist;
- wobei ein Überstrom des Ladestroms einer Differenz entspricht, die größer als der voreingestellte Spannungsschwellenwert ist,
- wobei das Steuermodul ferner zum weiterführenden Erhöhen des Ladestroms gemäß dem Anstiegsmuster, wenn die Differenz kleiner als der voreingestellte Spannungsschwellenwert ist, andernfalls zum Laden mit dem erhöhten Ladestrom als dem maximalen Ladestrom ausgelegt ist,
- das Steuermodul ferner, wenn die Differenz größer als der voreingestellte Spannungsschwellenwert ist, zum Verringern des Ladestroms gemäß einer Reduktionssequenz zum jeweiligen Reduzieren um einen voreingestellten Reduktionswert ausgelegt ist, bis die Differenz kleiner als der voreingestellte Spannungsschwellenwert ist, und
- **dadurch gekennzeichnet, dass** der voreingestellte Anstiegswert 500 mA beträgt, der voreingestellte Reduktionswert 100 mA beträgt und der voreingestellte Spannungsschwellenwert 0,3 V beträgt.

6. Vorrichtung nach Anspruch 5, wobei der Stromversorgungsanschluss (1) und der Erdungsanschluss (4) der USB-Schnittstelle des intelligenten Endgeräts sowie das Verbindungskabel davon dem maximalen Ladestrom entsprechen.

7. Vorrichtung nach einem der Ansprüche 5 oder 6, wobei der USB-Verbinder, der Stromversorgungsanschluss (1) der USB-Aufnahme, der Erdungsanschluss (4) und das entsprechende Verbindungskabel des intelligenten Endgeräts eine Querschnittsfläche aufweisen, die größer als die Standardquerschnittsfläche für einen Ladestrom von 500 mA ist.

8. Vorrichtung nach einem der Ansprüche 5 bis 7, wobei ein Kurzschlusszustand durch Erkennen des Stroms erkannt wird oder durch Erkennen des Widerstands erhalten wird oder durch Erkennen von vom Steuermodul gesendeten und empfangenen Daten erhalten wird.

## Revendications

1. Procédé (S200 à S300) pour une charge de courant de forte intensité d'un terminal intelligent, consistant :
- lorsque le fil de signal au niveau de la borne de câble de données positive et le fil de signal au niveau de la borne de câble de données négative sont dans un état de court-circuit, à commuter l'alimentation électrique à une alimentation électrique en courant de forte intensité, dans lequel à la fois le fil de signal au niveau de la borne de câble de données positive et le fil de signal au niveau de la borne de câble de données négative sont des fils de signal pour l'interface USB du terminal intelligent (S200) ;
- à augmenter petit à petit le courant de charge et à détecter de manière synchrone la tension de charge correspondant au courant de charge (S300) ;
- à déterminer si le courant de charge est une surintensité en fonction de la tension de charge (S300) ; et
- à réduire le courant de charge lorsque le courant de charge est une surintensité de telle sorte que la tension de charge se situe dans une plage de limite supérieure prédéterminée (S300),
dans lequel l'étape consistant à augmenter petit à petit le courant de charge et à détecter de manière synchrone la tension de charge correspondant au courant de charge consiste :
- à fixer le courant de charge à une valeur initiale prédéfinie, à détecter la tension de charge lorsque le courant de charge se trouve à la valeur initiale prédéfinie et à l'enregistrer en tant que tension de charge standard ; et
- à augmenter chaque fois le courant de charge en fonction d'un motif d'augmentation de l'augmentation par une valeur d'augmentation prédéfinie et à détecter la tension de charge correspondant au courant de charge augmenté,
dans lequel l'étape consistant à déterminer si le courant de charge est une surintensité en fonction de la tension de charge consiste :
- à déterminer si la différence entre la tension de charge correspondant au courant de charge augmenté et la tension de charge standard est plus petite qu'une valeur de seuil de tension prédéfinie ;
- dans lequel le courant de charge qui est une surintensité, correspond au fait que la différence est plus importante que la valeur de seuil de tension prédéfinie,
dans lequel le procédé consiste en outre :
- lorsque la différence est plus petite que la valeur de seuil de tension prédéfinie, à garder l'augmentation du courant de charge en fonction du motif d'augmentation ; sinon, à charger avec le courant de charge augmenté en tant que courant de charge maximal ;
dans lequel le procédé consiste en outre :
- lorsque la différence est plus importante que la valeur de seuil de tension prédéfinie, à réduire le courant de charge en fonction d'une séquence de diminution de la diminution par une valeur de diminution prédéfinie chaque fois jusqu'à ce que la différence soit plus petite que la valeur de seuil de tension prédéfinie, et
**caractérisé en ce que**
la valeur d'augmentation prédéfinie est de 500 mA, la valeur de diminution prédéfinie est de 100 mA et la valeur de seuil de tension prédéfinie est de 0,3 V.

2. Procédé selon la revendication 1, dans lequel la borne d'alimentation électrique (1) et la borne de mise à la terre (4) de l'interface USB du terminal intelligent, ainsi que le câble de raccordement de ce dernier, correspondent au courant de charge maximal (S100).

3. Procédé selon l'une quelconque des revendications précédentes, dans lequel le connecteur USB, la borne d'alimentation électrique (1) du siège USB, la borne de mise à la terre (4) et le câble de raccordement correspondant du terminal intelligent présentent une surface en coupe transversale plus importante que la surface en coupe transversale standard pour un courant de charge de 500 mA.

4. Procédé selon l'une quelconque des revendications précédentes, dans lequel un état de court-circuit est détecté en détectant le courant, ou obtenu en détectant la résistance, ou obtenu en détectant des données transmises et reçues.

5. Appareil pour une charge de courant de forte intensité d'un terminal intelligent, comprenant :
- un module de commutation d'alimentation électrique pour commuter l'alimentation électrique à une alimentation électrique en courant de forte intensité lorsque le fil de signal au niveau de la borne de câble de données positive (3) et le fil de signal au niveau de la borne de câble de données négative (2) sont dans l'état de court-circuit, dans lequel à la fois le fil de signal au niveau de la borne de câble de données positive et le fil de signal au niveau de la borne de câble de données négative sont des fils de signal pour une interface USB du terminal intelligent ;
- un module de commande pour augmenter petit à petit le courant de charge et pour détecter de manière synchrone la tension de charge correspondant au courant de charge ; et
- un module de détermination pour déterminer si le courant de charge est une surintensité en fonction de la tension de charge ;
dans lequel
- le module de commande est destiné en outre à réduire le courant de charge lorsque le courant de charge est une surintensité de telle sorte que la tension de charge se situe dans une plage de limite supérieure prédéterminée ;
- le module de commande est en outre destiné à fixer le courant de charge à une valeur initiale prédéfinie, à détecter la tension de charge lorsque le courant de charge se trouve à la valeur initiale prédéfinie et à l'enregistrer en tant que tension de charge standard, et à augmenter chaque fois le courant de charge en fonction d'un motif d'augmentation de l'augmentation par une valeur d'augmentation prédéfinie et à détecter la tension de charge correspondant au courant de charge augmenté,
- le module de détermination est en outre destiné à déterminer si la différence entre la tension de charge correspondant au courant de charge augmenté et la tension de charge standard est plus petite qu'une valeur de seuil de tension prédéfinie ;
- le courant de charge qui est une surintensité correspond au fait la différence est plus importante que la valeur de seuil de tension prédéfinie,
- dans lequel le module de commande est en outre destiné à garder l'augmentation du courant de charge en fonction du motif d'augmentation lorsque la différence est plus petite que la valeur de seuil de tension prédéfinie ; sinon, à charger avec le courant de charge augmenté en tant que courant de charge maximal,
- le module de commande est en outre destiné, lorsque la différence est plus importante que la valeur de seuil de tension prédéfinie, à réduire le courant de charge en fonction d'une séquence de diminution de la diminution par une valeur de diminution prédéfinie chaque fois jusqu'à ce que la différence soit plus petite que la valeur de seuil de tension prédéfinie, et
- **caractérisé en ce que**
la valeur d'augmentation prédéfinie est de 500 mA, la valeur de diminution prédéfinie est de 100 mA et la valeur de seuil de tension prédéfinie est de 0,3 V.

6. Appareil selon la revendication 5, dans lequel la borne d'alimentation électrique (1) et la borne de mise à la terre (4) de l'interface USB du terminal intelligent, ainsi que le câble de raccordement de ce dernier, correspondent au courant de charge maximal.

7. Appareil selon l'une quelconque des revendications 5 et 6, dans lequel le connecteur USB, la borne d'alimentation électrique (1) du siège USB, la borne de mise à la terre (4) et le câble de raccordement correspondant du terminal intelligent présentent une surface en coupe transversale plus importante que la surface en coupe transversale standard pour un courant de charge de 500 mA.

8. Appareil selon l'une quelconque des revendications 5 à 7, dans lequel un état de court-circuit est détecté en détectant le courant, ou obtenu en détectant la résistance, ou obtenu en détectant des données transmises et reçues au moyen du module de commande.
